# EUROPEAN PATENT APPLICATION

(11) **EP 2 345 864 A2**
(43) Date of publication of application: **20.07.2011**
(21) Application number: 11151371.9
(22) Date of filing: 19.01.2011
(51) Int. Cl.: F41G 1/35, F21L 4/02, F21V 23/04, F21V 33/00, F41G 11/00

(54) **Smart tactical flashlight**

(30) Priority: 19.01.2010 US 296235 P
(71) Applicant: Innovative Wireless Technologies, Inc., New York, NY 10165 (US)
(72) Inventor: Mironichev, Sergei Yur'yevich, 115035, Moscow (RU); Mechling, Christopher D., Rancho Santa Fe, 92067 (US)
(74) Representative: Winter, Brandl, Fürniss, Hübner, Röss, Kaiser, Polte - Partnerschaft

(57) **Abstract**

An advanced capability flashlight (11) and tactical system where multiple flashlights can be controlled remotely is disclosed herein. The system employs a remote control configuration wherein signals are modulated to avoid jamming and can further perform in environments with low signal-to-noise ratio. The system additionally employs programmable electronics to the flashlight (11) covered by a polyurethane protection layer to provide functionality in extreme conditions. Different head lamps can be easily switched out to an individual flashlight employing more LED lamps and different wavelengths of light as desired by a user. Additionally, a remote control device (12,20,20b) is disclosed that can be configured to a rail system (91) of a firearm.

## Description

### PRIORITY CLAIM

This patent application contains subject matter claiming benefit of the priority date of U. S. Prov. Pat. App. Ser. No. 61/296,235 filed on January 19, 2010 entitled SMART TACTICAL FLASHLIGHT; additionally this patent application contains subject matter claiming benefit of the priority date of U.S. Pat. App. Ser. No. 12/537,111 filed on August 6, 2009, which contains subject matter claiming benefit of international patent application No. PCT/RU2008/000508 filed on August 7, 2008; additionally this patent application contains subject matter claiming benefit of the priority date of international patent application No. PCT/RU2009/000075, filed on February 19, 2009 entitled SYSTEM FOR REMOTELY CONTROLLING SIGHTS AND TARGET DESIGNATORS.

### BACKGROUND OF THE INVENTION

### Field of the Invention

The present invention pertains generally to high intensity tactical illumination systems. More specifically, the present invention pertains to high intensity, hand held or mountable flashlights having more sophisticated electronics and other advanced capabilities for tactical environments.

### Description of the Prior Art

Many nighttime operations, particularly those performed by military and law enforcement, depend on the latest advancements in illumination technology to attain the best possible advantage. Of specific interest, is the use of light weight, high intensity illumination systems in tactical environments. As such, a tactical user will desire either to mount a high intensity flashlight to a barrel of a weapon, or position the flashlight in relative proximity to the user.

There are many desirable features and specifications of these flashlights. One is that the flashlight can be controlled remotely instead of by wire or manually, particularly for military and covert applications where the light source does not reveal the user's location. Another desired feature is that the flashlight be easily convertible between white light, ultra-violet (UV) light, infrared (IR) light and/or various colored light. Also, a strobing effect is desirable as an available feature for disorientating potential adversaries. Moreover, an infrared strobe could be discreetly used to identify team members and their locations.

In light of the above, it is an object of the present invention to provide the desired features described herein as well as additional advantages such as reduced power consumption. It is an additional object of the present invention to provide a high intensity flashlight design that employs LED light rather than that from xenon short-arc or incandescent light sources. It is a further object of the present invention to provide a design for underwater use while fully retaining remote functionality. It is still further an object of the present invention to provide a flashlight that is blast proof and resistant to extreme temperatures. Additionally, it is an object of the present invention to provide a design that is capable of using a single wireless control for multiple devices. It is still further an object of the present invention to provide a wireless design that is resistant to jamming and RF interference. An additional object of the present invention is to provide a tactical flashlight that is able to transmit a secure rescuer beacon. It is yet further an object of the present invention to provide a flashlight having a wireless strobe command and brightness control. It is yet still further an object of the present invention to provide a flashlight with programmable electronics and a motion sensor so that the flashlight and/or beacon can be programmed to turn off/on depending on physical movement thereof.

### BRIEF SUMMARY OF THE INVENTION

The present invention specifically addresses and alleviates the above mentioned deficiencies associated with the prior art. More particularly, the present invention comprises a system a flashlight comprising: a head lamp portion; a tubular body releasably coupled to the head lamp portion; an end cap portion releasably coupled to the tubular body and opposite the head lamp portion, the tubular body between the head lamp portion and the end cap portion, wherein the end cap houses programmable electronics; and remote control capabilities. Further, the remote control capabilities comprise a remote controller and the remote controller comprises: a printed circuit board having programmable electronics; a microprocessor having a transceiver for transmitting control signals, the transceiver employing a phase-shift keying system for individual electronic addressing of a multitude of flashlights also providing resistance to electronic interference and jamming.

The flashlight according to the invention is additionally characterized wherein the end cap programmable electronics and the remote control programmable electronics are each covered by a polyurethane protection layer to maintain functionality in adverse conditions including extreme temperature, underwater pressure, and excessive forces due to acceleration, and wherein the individual electronic addressing further employs a code length of 64 bytes, and further wherein the remote controller is encased in shrink-wrap plastic to provide a waterproof seal thereto.

The flashlight herein is additionally characterized as comprising a radio beacon configured to be activated remotely or programmably; and having an anodized aluminum material to the tubular body, head lamp portion, and end cap portion providing blast proof characteristics to the flashlight. The flashlight further provides versatility as the headlamp portion is modular and interchangeable providing a plurality of options, the plurality of options including: a plurality of colors; an IR illumination headlamp; and a UV type illumination headlamp.

The advanced capability flashlight further has a three-axis gyroscope wherein the programmable electronics are selectively configured to activate or deactivate the flashlight depending on an orientation of the flashlight as sensed by the gyroscope. In a preferred embodiment, the remote control capabilities are realized as first and second remote control buttons, wherein the first remote control button comprises: a base portion having a circular hollow interior; a circular ridge inside and about the circular hollow interior; a first printed circuit board having programmable electronics configured on a side thereto, wherein the programmable electronic are faced down with respect to the circular ridge, wherein the first printed circuit board is supported by the circular ridge around an edge thereof; an annular ring configured wherein the edge lies between the circular ridge and the annular ring; a circular battery configured to fit inside the annular ring; a cap portion configured to engage threads of the base portion, the cap portion having a button coupled to a second printed circuited board, the second printed circuit board coupled to the circular battery via a spring contact. Further in accordance with a preferred embodiment, first and second remote control button are physically separated and also each comprises a clamp configured to be coupled to a rail of a firearm.

More specifically with regard to the remote control buttons, the first remote control button serves to activate or deactivate the flashlight, while the second remote control button selects a flashlight mode and a brightness; and further the flashlight mode is changed from a steady beam to a strobe by momentarily clicking the second remote control button, and wherein the flashlight brightness is adjusted by pressing and holding the second remote control button.

In yet another aspect, the invention may be characterized as a tactical flashlight network comprising: a first flashlight, the first flashlight further comprising: a head lamp portion; a tubular body releasably coupled to the head lamp portion; and an end cap portion releasably coupled to the tubular body and opposite the head lamp portion, the tubular body between the head lamp portion and the end cap portion; a second flashlight; and further a unified controller is provided for activating or deactivating said first flashlight and said second flashlight, the unified controller for use by a team leader in a tactical environment.

The invention in this aspect is additionally characterized as having a first remote control device in wireless electronic communication with the first flashlight, the first remote control device comprising: a microprocessor having programmable flash memory and further having a transceiver for transmitting control signals, the transceiver employing a phase-shift keying system for individual electronic addressing of a multitude of flashlights also providing resistance to electronic interference and jamming; and a signal amplifier for enhanced signal-to-noise ratio.

As in other embodiments the tactical flashlight network further has a first remote control device in wireless electronic communication with the first flashlight, the first remote control device further comprising: a base portion having a circular hollow interior about an axis; a circular battery configured to fit inside the base portion; a cap portion configured to engage threads of the base portion, the cap portion having a button coupled to printed circuited board, wherein the base portion, the circular battery and the cap portion are axially aligned. Also the base portion is configured to engage a rail mount system of a rifle. Also the tactical flashlight network has advanced capability to include a GPS receiver; and a radio beacon for sending encrypted radio signals with GPS data, the radio beacon configured to transmit either remotely or programmably.

The tactical flashlight network is additionally characterized herein as comprising: a first flashlight, the first flashlight further comprising programmable electronics and a radio beacon for providing location information in emergency situations; a second flashlight; and a unified controller for activating or deactivating said first flashlight and said second flashlight, the unified controller for use by a team leader in a tactical environment.

As similar to other embodiments, the tactical flashlight network is additionally characterized wherein the first flashlight further has a head lamp portion, a tubular body releasably coupled to the head lamp portion, and an end cap portion releasably coupled to the tubular body and opposite the head lamp portion, the tubular body between the head lamp portion and the end cap portion, wherein the end cap houses the programmable electronics, wherein the programmable electronics are covered by a polyurethane protection layer to maintain functionality in adverse conditions including extreme temperature, underwater pressure, and excessive forces due to acceleration. The flashlight programmable electronic are further characterized as employing a wide-impulse modulation method to provide power to a first flashlight lamp, and further wherein power is diverted from the lamp when not in use.

Yet further, the tactical flashlight network herein is additionally characterized as further comprising remote control capabilities, the remote control capabilities comprising a remote controller, the remote controller comprising: a printed circuit board having programmable electronics; a transmitter for transmitting control signals; and shrink-wrap plastic encasing the remote controller to provide a waterproof seal thereto.

These, as well as other advantages of the present invention will be more apparent from the following description and drawings. It is understood that changes in the specific structure shown and described may be made within the scope of the claims, without departing from the spirit of the invention.

While the apparatus and method has or will be described for the sake of grammatical fluidity with functional explanations, it is to be expressly understood that the claims, unless expressly formulated under 35 USC 112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 USC 112 are to be accorded full statutory equivalents under 35 USC 112. The invention can be better visualized by turning now to the following drawings wherein like elements are referenced by like numerals.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:

Fig. 1A is a perspective illustration of a first tactical flashlight of the present invention coupled to a barrel of a weapon;

Fig. 1B shows an exemplary wireless unified controller able to activate/deactivate four tactical flashlights;

Fig. 1C illustrates a rear perspective view of the first preferred tactical flashlight;

Fig. 1D illustrates a frontal perspective view of the first preferred tactical flashlight;

Fig. 1E illustrates a profile view thereof;

Fig. 1F is a front end view of a tactical flashlight showing a first head lamp embodiment;

Fig. 1G and Fig. 1H illustrate additional head lamp embodiments of the present invention;

Fig. 1I illustrates an exploded view of the flashlight embodiment with options for varying head lamps of the present invention;

Fig. 1J is an exploded view of an exemplary end cap with programmable electronics of the present invention;

Fig. 2A is a perspective view of a first wireless remote control device to accompany flashlight shown in Fig. 1A;

Fig. 2B is an exploded view of the first remote control device illustration internal component and their configuration;

Fig. 3A is a perspective view of a second wireless remote control device of the present invention additionally showing relative scale;

Fig. 3B is perspective illustration showing the wireless remote control embodiment with its shrink wrap plastic removed;

Fig. 3C is perspective illustration showing the wireless remote control embodiment with its shrink wrap plastic protective covering; and

Fig. 3D is an enlarged top plan view thereof.

### DETAILED DESCRIPTION OF THE PREFERRED EMBODIMENTS

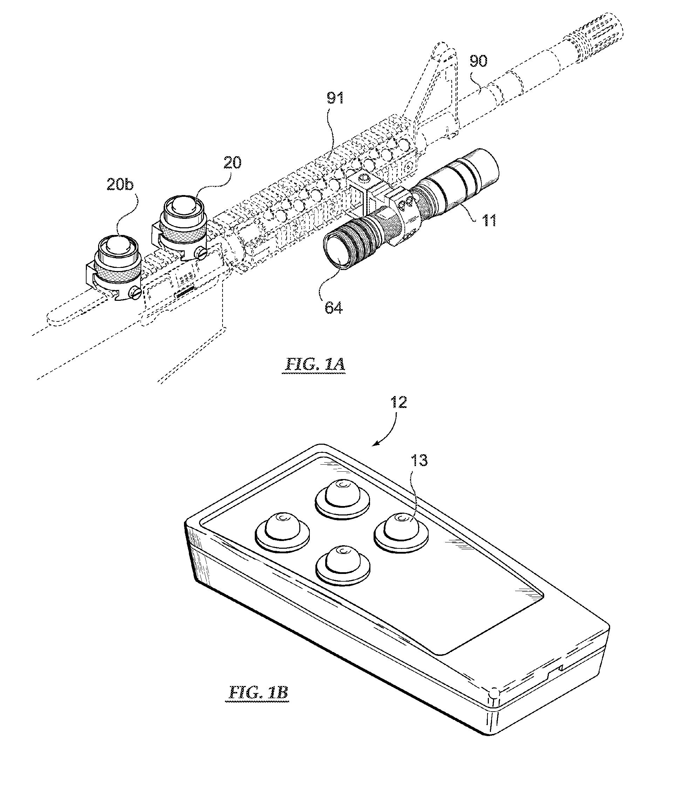

Initially, with regard to Fig. 1A, a preferred device **11** of the present invention is illustrated in perspective coupled to an assault rifle as envisioned for tactical environments. The flashlight device **11** has been specifically designed for tactical situations for military and law enforcement as well as recreational game hunting. A mounting device is typically used to affix the device **11** to a rail mount system **91** of the weapon **90** as shown. Alternatively, the device **11** could be configured below the weapon in the same vertical plane as the rifle **90** barrel, also not impeding the rifleman's sight. Importantly, the flashlight **11** has wireless remote control capability as further discussed herein. In a first wireless remote control embodiment, remote control buttons **20, 20b** buttons are provided.

In a preferred embodiment, the two buttons **20, 20b** are provided as follows: a first remote control button **20** serves to activate or deactivate the flashlight **11;** while a second remote control button **20b** selects a flashlight mode and brightness. The flashlight mode is changed from a steady beam to a strobe by momentarily clicking the second remote control button **20b.** Additionally, flashlight brightness is adjusted by pressing and holding the second remote control button **20b.** The brightness will cycle from low to high and back to low again to decrease brightness. Alternatively to remote operation, end cap button **64** is provided for manual operation. Also in a preferred embodiment, press and hold end cap button **64** until the flashlight **11** blinks once to activate the remote control **20, 20b, 30;** and press and hold the end cap until the flashlight blinks twice to deactivate the remote control **20, 20b, 30.** The push button **64** manual control provided is preferable to twist on/off as used in other designs.

With regard to Fig. 1B, the invention is more broadly a tactical flashlight system wherein multiple flashlights **11** can be activated or deactivated by a unified controller **12.** Buttons **13** provided correspond to a particular flashlight in the tactical system. It is further envisioned that a tactical team leader will carry the unified controller **12** providing means to activate or deactivate flashlights **11** within the team.

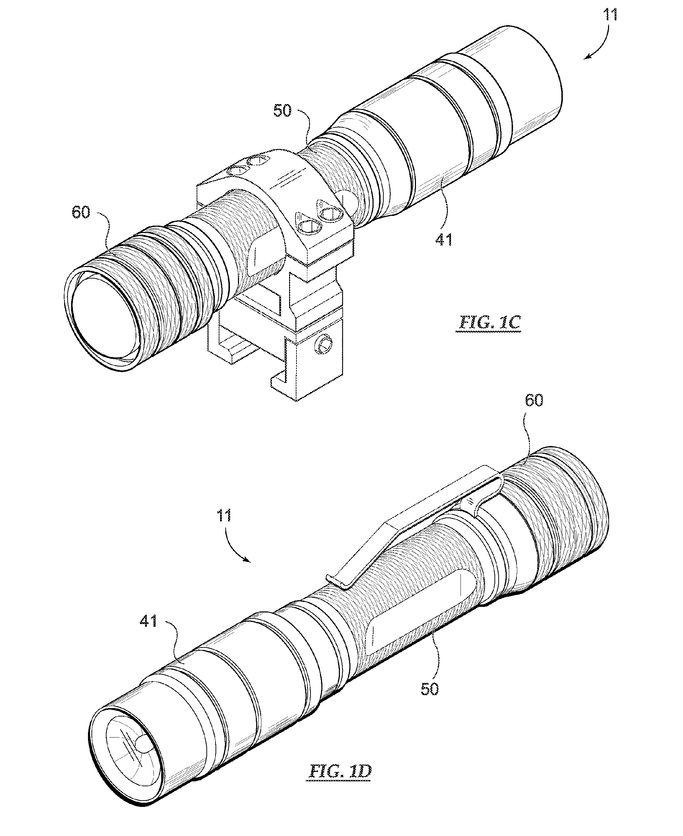

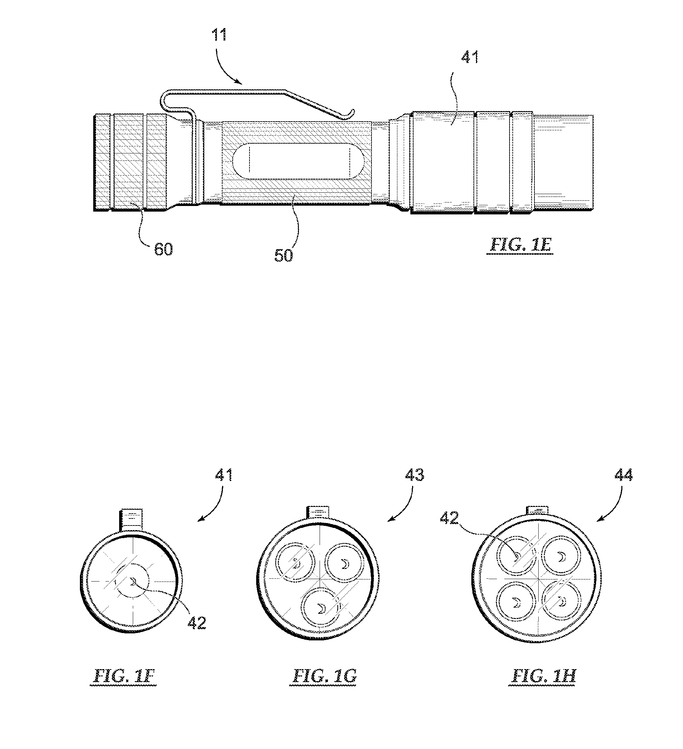

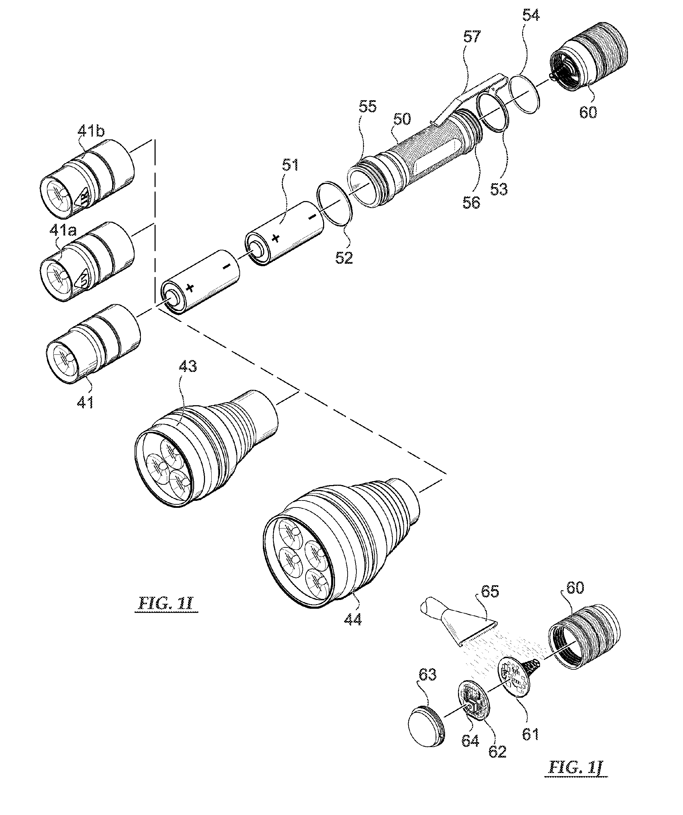

Turning now to Fig. 1C and Fig. 1D, front and rear views of the first preferred tactical flashlight **11** are illustrated in perspective. Generally, the flashlight **11** comprises three portions including a head lamp **41,** a tubular body **50** and an end cap **60.** The three portions **41, 50, 60** mate together with threads **55, 56** (Fig. 1I) and in this way, modular characteristics are created as to be described herein. One such modular characteristic is that the head lamps **41, 41a, 41b** (Fig. 1I) can be easily interchanged to different colors and also comprising IR and UV type illumination. Additionally, more illumination capability can be achieved with bigger head lamps **43, 44** containing more LEDs also as shown herein (Fig. 1G, Fig. 1H, Fig. 1I). Fig. 1E provides a profile view of the first preferred tactical flashlight. Fig. 1F is a front end view of a tactical flashlight **11** showing the first head lamp embodiment **41;** while Fig. 1G and Fig. 1H each illustrate additional head lamp embodiments **43, 44** of the present invention **11** with additional LEDs **42.**

Further, with reference to Fig. 1I, the tubular body **50** is provided to house batteries **51** wherein the entire device **41, 50, 60,** is composed of anodized (V-90) aircraft aluminum providing blast proof characteristics. Spacers **52, 54** are provided between threads **55, 56** to allow for extra torque to components **41, 50, 60** in aiding a water tight design. Further, the close tolerances achieved during manufacture of components will help to achieve the hermetically sealed, water tight design. This will also make the flashlight **11** functional in humid and/or salty conditions. All embodiments herein provide the option of a convenient detachable clip for clothes and a button safety lock to prevent flashlight actuation during transportation.

As discussed herein also with regard to Fig. lI, the headlamp portion **41** is modular and interchangeable providing a plurality of options **41, 41a, 41b, 43, 44** to include a plurality of colors, a UV type illumination headlamp **41a,** and an IR illumination headlamp **41b.**

With reference to Fig. 1J, the end cap houses programmable electronics **61, 62** as further detailed herein; and additionally these electronics **61, 62** are covered by a polyurethane protection layer **65** to maintain functionality in adverse conditions including extreme temperature, water depth and even where excessive acceleration or g-forces are applied.

The wireless control is made available by unique electronic addressing of individual flashlights **11** as further described herein. Since electronics **61, 62** provided to the flashlight are programmable in a preferred embodiment, a single remote controller **12** can be used to control multiple devices useful to a team leader in tactical situations, for example.

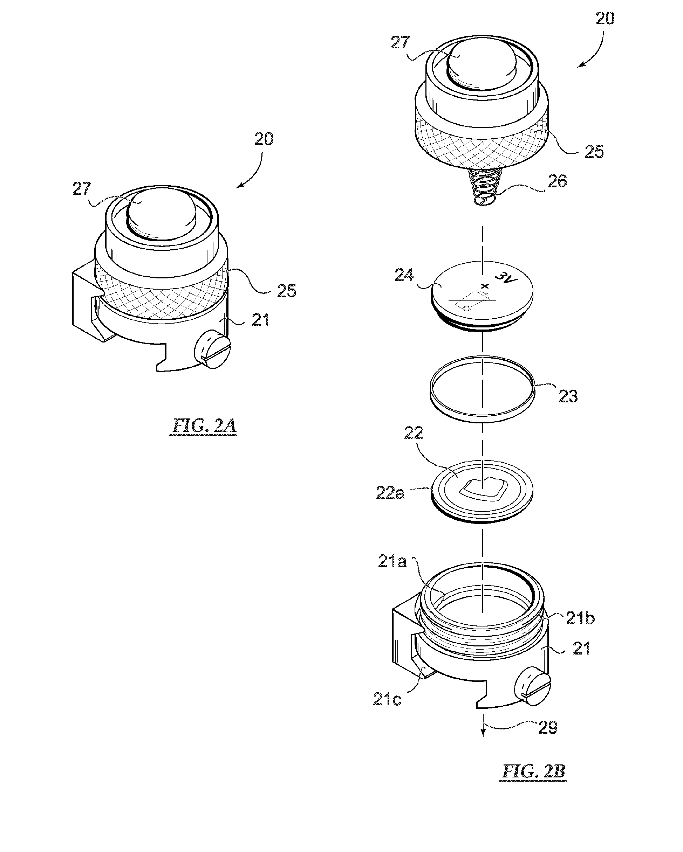

In a preferred embodiment illustrated in Fig. 2A and in Fig. 2B, the remote control capabilities are realized as first **20** and second **20b** (Fig. 1A) remote control buttons. The first remote control button **20** herein has the following components about a vertical axis **29:** a base portion **21** having a circular hollow interior; a circular ridge **21a** inside and about the circular hollow interior; a first printed circuit board **22** having programmable electronics configured on a side thereto, wherein the programmable electronic are faced down with respect to the circular ridge **21.** Further, the first printed circuit board **22** is supported by the circular ridge around an edge **22a** thereof. Also, an annular ring **23** is configured so that the edge **22a** lies between the circular ridge **21a** and the annular ring **23.** A circular battery **24** is additionally configured to fit inside the annular ring **23.** A cap portion **25** is provided to engage threads **21a** of the base portion **21,** the cap portion **25** further has a button **27** coupled to a second printed circuited board (not shown), the second printed circuit board being coupled to the circular battery **24** via a spring contact **26.** Further as shown herein, first **20** and second remote **20b** control button are physically separated and also each **20, 20b** comprises a clamp **21c** configured to be coupled to a rail of a firearm.

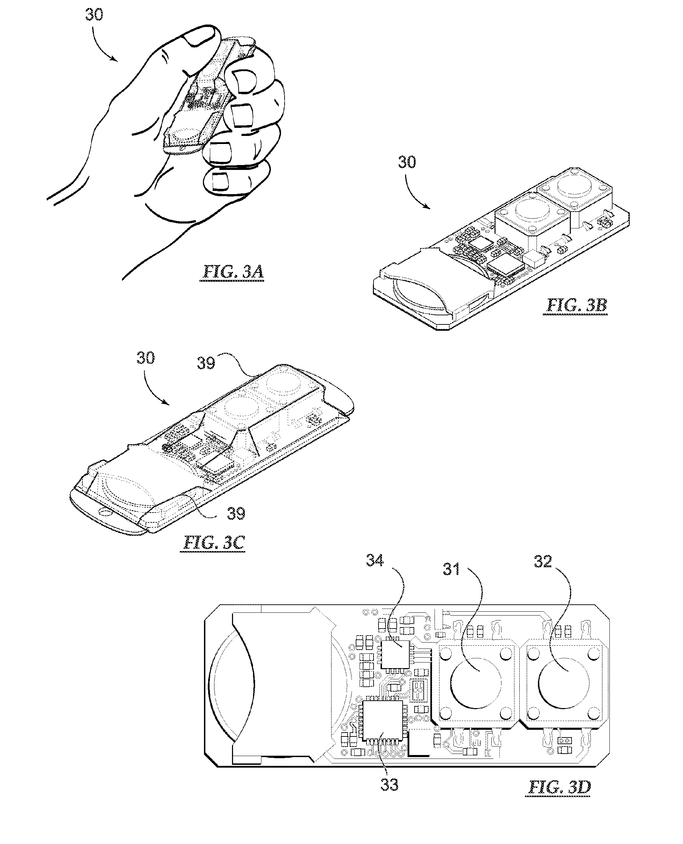

Fig. 3A illustrates a second remote control **30** embodiment showing relative scale. Fig. 3B, Fig. 3C and Fig. 3D illustrate additional views of the second remote control embodiment **30.** As illustrated in Fig. 3C, the remote control **30** is encased in shrink-wrap plastic **39** to provide a waterproof seal. With regard to Fig. 3D, this embodiment **30** is additionally characterized as having a microprocessor **33** having programmable flash memory and further having a transceiver **33** for transmitting control signals, the transceiver **33** employing a phase-shift keying system for individual electronic addressing of a multitude of flashlights also providing resistance to electronic interference and jamming. The remote control device has two buttons **31, 32** providing functionality as explained herein in addition to a signal amplifier **34** providing enhanced signal-to-noise ratio.

Another feature disclosed herein is an encrypted rescuer beacon incorporated to flashlight electronics **61, 62.** In a variety of preferred embodiments, the rescuer beacon could be remotely activated by emergency personnel, or alternatively user activated or even programmable to activate as triggered by a given event. Other features contemplated are a strobe capability and remote brightness control. The remote control device **20, 20b, 30** and the beacon **61, 62** will employ a phase shift keying system in transmission (code length 64 bytes) for encoding of signals and also providing unique electronic addressing of a few million flashlights **11.**

Further, the embodiments described herein are more energy efficient than previous designs. Advancements in short range RF transmission allow for less power consumption. Additionally, a programmable **61, 62** design can provide a smart power management system wherein if a battery **51** has more voltage than required, than the device can reduce terminal voltage and vice versa. Also, the remote wireless device employs a wide-impulse modulation method in its transmission to provide more energy efficiency.

The flashlight 11 and associated electronics **22, 33, 61, 62** described herein are also resistant to RF interference and jamming. First, the phase shift keying employed by the transmission will prevent typical reduction in signal to noise ratios cased by most interference. Secondly, the electronics **33** are programmed to acknowledge transmissions also reducing the chance of successful jamming.

According to another preferred embodiment, the flashlight **11** is specifically designed for environments where rescue operations may be needed such as that having a high risk of snow avalanche, mountain climbing, under water or subterranean activities, for example. Specifically, this embodiment provides an inertial navigator aided by a three axis electron gyroscope incorporated to the electronics **61, 62.** Further it provides a high powered radio and light beacon with programmable electronics **61, 62** to turn off or on the flashlight and/or beacon in response to loss of motion. In law enforcement applications, the flashlight can record the last hour of movement in the event that a crime scene recreation is needed.

Many alterations and modifications may be made by those having ordinary skill in the art without departing from the spirit and scope of the invention. Therefore, it must be understood that the illustrated embodiments have been set forth only for the purposes of example and that it should not be taken as limiting the invention as defined by the following claims. For example, notwithstanding the fact that the elements of a claim are set forth below in a certain combination, it must be expressly understood that the invention includes other combinations of fewer, more or different elements, which are disclosed in above even when not initially claimed in such combinations.

While the particular Smart Tactical Flashlight and System Thereof as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

## Claims

1. A flashlight comprising:
a head lamp portion;
a tubular body releasably coupled to the head lamp portion;
an end cap portion releasably coupled to the tubular body and opposite the head lamp portion, the tubular body between the head lamp portion and the end cap portion, wherein the end cap houses programmable electronics; and
remote control capabilities, the remote control capabilities comprising a remote controller, the remote controller comprising:
a printed circuit board having programmable electronics;
a microprocessor having a transceiver for transmitting control signals, the transceiver employing a phase-shift keying system for individual electronic addressing of a multitude of flashlights also providing resistance to electronic interference and jamming.

2. The flashlight of claim 1, wherein the end cap programmable electronics and the remote control programmable electronics are each covered by a polyurethane protection layer to maintain functionality in adverse conditions including extreme temperature, underwater pressure, and excessive forces due to acceleration, and wherein the individual electronic addressing further employs a code length of 64 bytes, and further wherein the remote controller is encased in shrink-wrap plastic to provide a waterproof seal thereto.

3. The flashlight of claim 1 or claim 2, further comprising:
a radio beacon configured to be activated remotely or programmably; and
an anodized aluminum material to the tubular body, head lamp portion, and end cap portion providing blast proof characteristics to the flashlight.

4. The flashlight according to anyone of the preceding claims, wherein the headlamp portion is modular and interchangeable providing a plurality of options, the plurality of options comprising:
a plurality of colors;
an IR illumination headlamp; and
a UV type illumination headlamp.

5. The flashlight according to anyone of the preceding claims further comprising a three-axis gyroscope wherein the programmable electronics are selectively configured to activate or deactivate the flashlight depending on an orientation of the flashlight as sensed by the gyroscope.

6. The flashlight according to anyone of the preceding claims, the remote control capabilities comprising first and second remote control buttons, wherein the first remote control button comprises:
a base portion having a circular hollow interior;
a circular ridge inside and about the circular hollow interior;
a first printed circuit board having programmable electronics configured on a side thereto, wherein the programmable electronic are faced down with respect to the circular ridge, wherein the first printed circuit board is supported by the circular ridge around an edge thereof;
an annular ring configured wherein the edge lies between the circular ridge and the annular ring;
a circular battery configured to fit inside the annular ring;
a cap portion configured to engage threads of the base portion, the cap portion having a button coupled to a second printed circuited board, the second printed circuit board coupled to the circular battery via a spring contact.

7. The flashlight of claim 6, wherein the first and second remote control button are physically separated and wherein each comprises a clamp configured to be coupled to a rail of a firearm.

8. The flashlight of claim 6, wherein the first remote control button serves to activate or deactivate the flashlight, and wherein the second remote control button selects a flashlight mode and a brightness, wherein the flashlight mode is changed from a steady beam to a strobe by momentarily clicking the second remote control button, and wherein the flashlight brightness is adjusted by pressing and holding the second remote control button.

9. A tactical flashlight network comprising:
a first flashlight, the first flashlight further comprising: a head lamp portion; a tubular body releasably coupled to the head lamp portion; and an end cap portion releasably coupled to the tubular body and opposite the head lamp portion, the tubular body between the head lamp portion and the end cap portion;
a second flashlight; and
a unified controller for activating or deactivating said first flashlight and said second flashlight, the unified controller for use by a team leader in a tactical environment.

10. The tactical flashlight network of claim 9, further comprising a first remote control device in wireless electronic communication with the first flashlight, the first remote control device comprising:
a microprocessor having programmable flash memory and further having a transceiver for transmitting control signals, the transceiver employing a phase-shift keying system for individual electronic addressing of a multitude of flashlights also providing resistance to electronic interference and jamming; and
a signal amplifier for enhanced signal-to-noise ratio.

11. The tactical flashlight network of claim 9 or 10, further comprising a first remote control device in wireless electronic communication with the first flashlight, the first remote control device comprising:
a base portion having a circular hollow interior about an axis;
a circular battery configured to fit inside the base portion;
a cap portion configured to engage threads of the base portion, the cap portion having a button coupled to printed circuited board, wherein the base portion, the circular battery and the cap portion are axially aligned.

12. The tactical flashlight network of claim 11, wherein the first remote control base portion is configured to engage a rail mount system of a rifle and/or wherein the first flashlight comprises:
a GPS receiver; and
a radio beacon for sending encrypted radio signals with GPS data, the radio beacon configured to transmit either remotely or programmably.

13. A tactical flashlight network comprising:
a first flashlight, the first flashlight further comprising programmable electronics and a radio beacon for providing location information in emergency situations;
a second flashlight; and
a unified controller for activating or deactivating said first flashlight and said second flashlight, the unified controller for use by a team leader in a tactical environment.

14. The tactical flashlight network of claim 13, the first flashlight further comprising:
a head lamp portion;
a tubular body releasably coupled to the head lamp portion; and
an end cap portion releasably coupled to the tubular body and opposite the head lamp portion, the tubular body between the head lamp portion and the end cap portion, wherein the end cap houses the programmable electronics, wherein the programmable electronics are covered by a polyurethane protection layer to maintain functionality in adverse conditions including extreme temperature, underwater pressure, and excessive forces due to acceleration.

15. The tactical flashlight network of claim 13 or claim 14, wherein the programmable electronic employ a wide-impulse modulation method to provide power to a first flashlight lamp, and further wherein power is diverted from the lamp when not in use and/or wherein the tactical flashlight network is further comprising remote control capabilities, the remote control capabilities comprising a remote controller, the remote controller comprising:
a printed circuit board having programmable electronics;
a transmitter for transmitting control signals; and
shrink-wrap plastic encasing the remote controller to provide a waterproof seal thereto.
